# EUROPEAN PATENT APPLICATION

(11) **EP 4 760 710 A1**
(43) Date of publication of application: **17.06.2026**
(21) Application number: 23947827.4
(22) Date of filing: 09.08.2023
(51) Int. Cl.: G10L 15/22, G10L 15/18, G06F 16/90, G06F 40/56

(54) **DATA PROCESSING DEVICE, DATA PROCESSING SYSTEM, AND DATA PROCESSING METHOD**

(71) Applicant: Nissan Motor Co., Ltd., Yokohama-shi, Kanagawa 221-0023 (JP)
(72) Inventor: KAMINUMA, Atsunobu, Atsugi-shi, Kanagawa 243-0123 (JP)
(74) Representative: Global IP Europe Patentanwaltskanzlei
(86) International application number: PCT/JP2023/029122
(87) International publication number: WO 2025/032769

(57) **Abstract**

A data processing device 1 includes a control signal acquisition unit 13 that acquires a control signal of a vehicle, and a prompt generation unit 14 that generates a prompt for a language model that outputs language information. The prompt generation unit 14 generates the prompt including a vehicle text obtained by textualizing the control signal. The prompt includes a text indicating a form of a response sentence by the language model or a range of the response sentence.

## Description

### Technical Field

The present invention relates to a data processing device, a data processing system, and a data processing method.

### Background Art

Conventionally, data generation methods using language models have been known (for example, Patent Document 1). The data generation method disclosed in Patent Document 1 includes a step of constructing a prompt that serves as an input sentence for a language model by using original data, and a step of inputting the prompt into the language model to generate new data and label information for the new data from the language model.

### Prior Art Document

### Patent Document

Patent Document 1: JP-A-2023-018624

### Summary of Invention

### Problems to Be Solved by Invention

When a device that executes the above-described data generation method is applied to a vehicle, since information included in a control signal of the vehicle is not used as the prompt, there is a problem in that a response corresponding to the control signal of the vehicle cannot be obtained from the language model.

A problem to be solved by the present invention is to provide a data processing device, a data processing system, and a data processing method that obtain a response corresponding to a control signal of a vehicle from a language model.

### Means for Solving Problems

The present invention solves the above-described problem by acquiring a control signal of a vehicle, generating a prompt including a vehicle text obtained by textualizing acquired control signal, and inputting the prompt into a language model. The prompt includes a text indicating a form of a response sentence by the language model or a range of the response sentence.

### Effects of Invention

According to the present invention, a response corresponding to the control signal of the vehicle can be obtained from the language model.

### Brief Description of Drawings

FIG. 1 is a block diagram of a data processing system according to one embodiment of the present invention.
FIG. 2 is a drawing illustrating prompts generated by a prompt generation unit in FIG. 1.
FIG. 3 is a drawing illustrating a specific example of a speech uttered by a user and a specific example of language information output from a language model 5.
FIG. 4 is a drawing illustrating prompts generated by the prompt generation unit in FIG. 1.
FIG. 5 is a drawing illustrating a specific example of a speech uttered by a user and a specific example of language information output from the language model 5.
FIG. 6 is a flowchart for describing a data processing method performed by the data processing system.

### Mode(s) for Carrying out the Invention

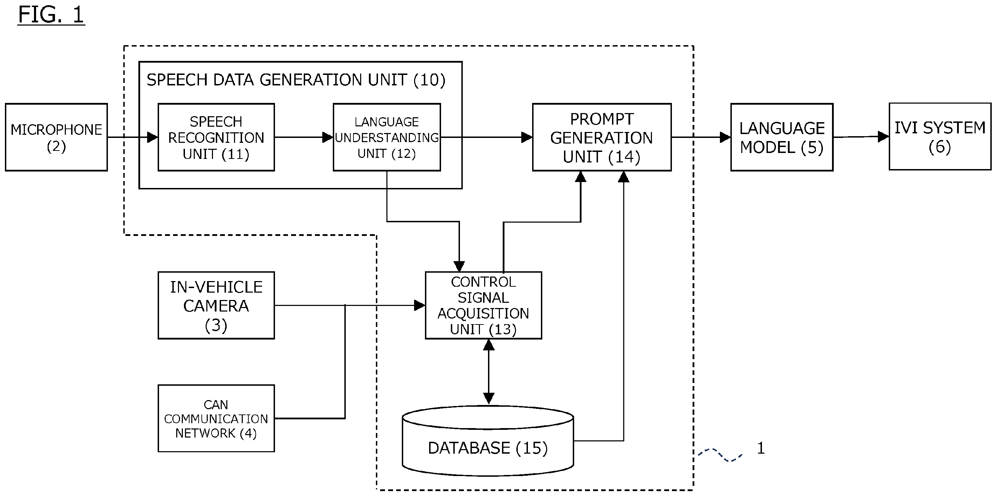

The following describes one embodiment of a data processing device, a data processing system, and a data processing method according to the present invention with reference to the drawings. FIG. 1 is a block diagram of the data processing system according to one embodiment of the present invention. The data processing system includes a data processing device 1, a microphone 2, an in-vehicle camera 3, a CAN communication network 4, a language model 5, and an IVI system 6. The data processing system is installed in a vehicle. The data processing system receives a speech of a user as an input, generates a prompt using a speech text converted from a speech signal and further using information included in a control signal of the vehicle, outputs the prompt to a language model, and obtains a response from the language model.

The data processing device 1 generates a prompt for the language model 5, the prompt including a vehicle text obtained by textualizing the control signal of the vehicle. The data processing device 1 includes a speech data generation unit 10, a control signal acquisition unit 13, a prompt generation unit 14, and a database 15. The data processing device 1 includes a memory (recording medium) that stores programs, a processor to execute the programs, and the like. The data processing device 1 has a function of generating speech data based on the speech signal, a function of acquiring the control signal of the vehicle, and a function of generating the prompt, and includes the speech data generation unit 10, the control signal acquisition unit 13, and the prompt generation unit 14 as function blocks to execute these functions. The processor included in the data processing device 1 executes the programs, thereby executing processes of the function blocks, such as the speech data generation unit 10. Eash component included in the data processing device 1 will be described below in detail.

The microphone 2 is installed in the vehicle, and converts the speech of the user inside the vehicle into the speech signal. The in-vehicle camera 3 captures an image of the surroundings of the vehicle, and outputs captured image data (a captured image) to the data processing device 1. The in-vehicle camera 3 is used for, for example, detecting obstacles in autonomous driving control, detecting lanes in lane keeping, displaying images of the surroundings of the vehicle during parking, and the like. The CAN communication network 4 is a network (communication network) for transmitting and receiving the control signal between a plurality of in-vehicle devices, such as an ECU, a motor, and a sensor.

The language model 5 is a natural language processing model (large language model: LLM) of machine learning, which is represented by Transformer, BERT, and the like, and constructed using a large amount of text data and deep learning techniques. The language model 5 receives the prompt from the data processing device 1, assigns probabilities to sentences and words included in the prompt, and outputs an appropriate response to the input. That is, the language model 5 receives the prompt as an input, and outputs language information.

The IVI system 6 is a system that provides information and entertainment to the user inside the vehicle through an in-vehicle display, a speaker, and the like. The IVI system 6 includes a speech synthesis system (TTS), and converts language data generated by the language model 5 into a speech to realize a conversation with the user through display on a screen and output of the speech from the speaker. The IVI system 6 does not necessarily need to include TTS, and speech synthesis included in the language model 5 may be used as it is for the speech output.

Next, each component included in the data processing device 1 will be described. The speech data generation unit 10 generates the speech data from the speech signal (user's speech) input through the microphone 2. The speech data generation unit 10 includes a speech recognition unit 11 and a language understanding unit 12. The speech recognition unit 11 has a function of automatic speech recognition (ASR), and converts the speech signal into the speech text (a text sentence). The speech text is obtained by textualizing the speech.

The language understanding unit 12 analyzes the speech text converted by the speech recognition unit 11 to identify the intent (Intent) of the user who uttered the speech and/or a named entity (Entity). The intent of the user means a matter that the user has in mind, such as confirmation of an operation method of an in-vehicle device, an operation command to the in-vehicle device, or acquisition of information such as a destination or a point of interest (POI). The named entity (Entity) is a language that has been predefined, such as a proper noun including a name of an in-vehicle device, a place name, or a facility name. For example, when the user utters "Set a destination," the language understanding unit 12 identifies intent indicating that the user wants to operate something, and extracts the destination as the named entity. The language understanding unit 12 may analyze characters included in the speech text to analyze what kind of category the user is talking about. The category is classified, for example, into a concept related to a vehicle instruction manual, such as driving of the vehicle or an operation method of an in-vehicle device, or a concept related to a navigation system, such as route guidance or destination setting. The language understanding unit 12 outputs the speech text converted by the speech recognition unit 11 to the prompt generation unit 14, and outputs the intent (Intent) and/or the named entity (Entity) to the control signal acquisition unit 13 and the prompt generation unit 14. The language understanding unit 12 may identify any one of the intent (Intent) and the named entity (Entity). The speech data generation unit 10 does not necessarily need to include the language understanding unit 12. When the speech data generation unit 10 does not include the language understanding unit 12, the output signal of the speech recognition unit 11 may be output to the control signal acquisition unit 13.

The control signal acquisition unit 13 acquires the control signal of the vehicle. The control signal corresponds to an image signal including the captured image data and/or a CAN signal. The control signal acquisition unit 13 stores information included in the CAN signal and the captured image data of the in-vehicle camera 3 in the database 15 to hold vehicle information and environment information around the vehicle. The vehicle information indicates a vehicle speed, a current position of the vehicle, autonomous driving on/off, states of lamps and switches included in the in-vehicle device, and the like. The environment information includes information on traffic regulations, such as no passing and no parking/no stopping, points of interest (POIs), such as stores and facilities around the vehicle, road information, such as stop lines and lane boundary lines, and the like. The control signal acquisition unit 13, for example, holds a current vehicle speed and a past vehicle speed (for example, a vehicle speed two minutes ago) from vehicle speed information included in the CAN signal. The control signal acquisition unit 13 may hold states (lighting or extinguishing) of various lamps, such as a seat belt warning lamp, a VDC OFF indicator lamp, a high-beam indicator lamp, and a turn signal indicator lamp, based on state signals or ON/OFF switching signals for the lamps. The control signal acquisition unit 13 does not need to store information, such as vehicle information, in the database 15, and may acquire the vehicle information and the like from the captured image data or the CAN signal in real time.

The control signal acquisition unit 13 transmits at least the vehicle information to the prompt generation unit 14. The control signal acquisition unit 13 may transmit the environment information to the prompt generation unit 14. The vehicle information and the environment information are information included in the control signal. The control signal acquisition unit 13 may extract information on the user's speech from the intent (Intent) and the named entity (Entity) among the information included in the control signal and the information stored in the database 15, and transmit the extracted information to the prompt generation unit 14. The control signal acquisition unit 13 may output the acquired control signal to the prompt generation unit 14.

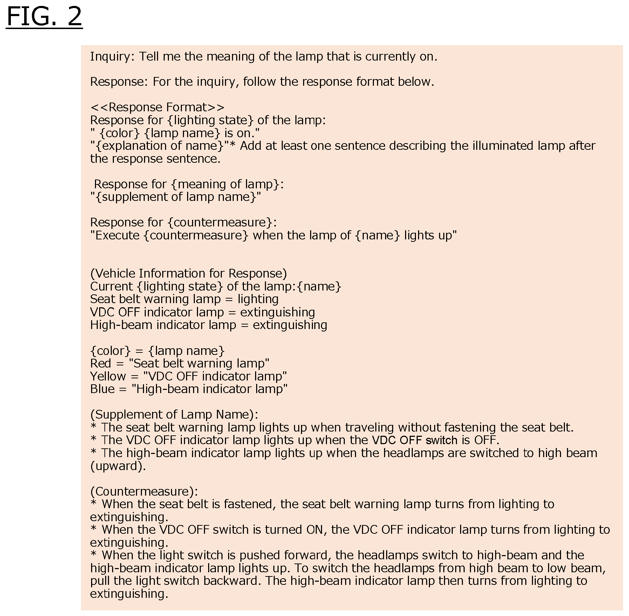

The prompt generation unit 14 identifies the vehicle information related to the speech uttered by the user based on the control signal, and generates the prompt including the vehicle text. FIG. 2 is a drawing illustrating the prompt generated by the prompt generation unit 14. In the example of FIG. 2, the user utters a speech such as "Tell me the meaning of the lamp that is currently on." As illustrated in FIG. 2, the prompt is indicated by text. The prompt generation unit 14 includes the speech text (a text included in the speech data) converted by the speech recognition unit 11 in the prompt. In the example of FIG. 2, "Tell me the meaning of the lamp that is currently on." corresponds to the speech text. The prompt generation unit 14 identifies the vehicle information related to the speech among the vehicle information input from the control signal acquisition unit 13. The vehicle information related to the speech is the vehicle information relevant to the speech uttered by the user. For example, the vehicle information relevant to the intent (Intent) of the user, the vehicle information including the named entity, and the vehicle information relevant to the named entity are the vehicle information related to the speech.

When the content of the user's inquiry can be identified from the intent (Intent), the prompt generation unit 14 may identify information that may serve as a response to the inquiry, information related to the information that may serve as a response, and the like as the vehicle information related to the speech. For example, when the user utters a speech such as "Explain VDC (Vehicle Dynamics Control)," the prompt generation unit 14 identifies VDC as in-vehicle equipment relevant to the response, and determines that the function of VDC is inquired.

The prompt generation unit 14 may identify in-vehicle equipment that includes the same name as the named entity (Entity) in the speech text, or in-vehicle equipment relevant to the named entity, and may specify vehicle information related to the identified in-vehicle equipment as the vehicle information relevant to the speech. For example, in the example of the speech text "Tell me the meaning of the lamp that is currently on." illustrated in FIG. 2, the words "on" and "lamp" correspond to the words in the speech text. The prompt generation unit 14 identifies equipment corresponding to the lamp (a warning lamp) among in-vehicle equipment as in-vehicle equipment related to the user's speech based on the word ("on" or "lamp") in the speech text. This in-vehicle equipment is, for example, a seat belt warning lamp, a VDC OFF indicator lamp, a high-beam indicator lamp, and a warning lamp for remaining fuel or battery capacity. Furthermore, the prompt generation unit 14 identifies information indicating the state of in-vehicle equipment among the vehicle information input from the control signal acquisition unit 13. When the in-vehicle equipment is a warning lamp, such as a seat belt warning lamp, the state of the in-vehicle equipment corresponds to lighting and extinguishing of the lamp.

The prompt generation unit 14 extracts information related to the identified in-vehicle equipment from information related to an operation manual for the vehicle. The information related to the operation manual is stored in the database 15. The operation manual describes specifications and operation methods of the in-vehicle devices, descriptions of the in-vehicle equipment, methods for troubleshooting problems, and the like. For example, in a manual for the seat belt warning lamp, conditions under which the seat belt warning lamp lights up, a description of the state when the seat belt warning lamp is on, procedures for turning off the seat belt warning lamp, and the like are described.

The prompt generation unit 14 refers to a response table stored in the database 15, and selects a response format of the language model 5 based on the intent (Intent). The response table stores a text indicating the response format of the language information output from the language model 5 corresponding to the intent (Intent). The response format indicates the form of a response sentence or the range of the response sentence by the language model 5, and information included in the response format specifies a response manner or response content for the language model 5. The response format is composed of a text including variables and character strings. Words or character strings such as a name of in-vehicle equipment, a state of the in-vehicle equipment, a description of the in-vehicle equipment, a name of an object existing inside the vehicle or outside a vehicle cabin, and a state of the object are assigned to the variables. The response format indicates a sentence structure used by the language model 5 when the response is generated. The prompt generation unit 14 may select the response format from the response table corresponding to the category analyzed by the language understanding unit 12. In the example of FIG. 2, in a sentence "For the inquiry, follow the response format below." in the text indicating the response format, the word "below" corresponds to the range of the response sentence. As another example of the range of the response sentence, the range of the response sentence may be represented by a specific numerical value, such as the number of characters or the number of sentences, for example, "Answer within 100 characters."

The prompt generation unit 14 identifies various kinds of intent from the intent (Intent), for example, the user is inquiring about a function of in-vehicle equipment, inquiring about a current driving state, inquiring about a navigation system including destination setting or a POI search, and inquiring about driving of the vehicle. In the response table, the response format is defined corresponding to each of the various kinds of intent. For example, from the intent (Intent), when the user is inquiring about automatic driving, as the response format, a first sentence for answering whether the authority of a driving operation belongs to the driver or to the system is defined. The first sentence is formed of a character string indicating the name of the in-vehicle device and/or the state of the in-vehicle device. The response format is defined, for example, by a text such as "{the driver or the system} is currently driving." However, { } is a variable, and " {the driver or the system} is driving" corresponds to the character string indicating the state of the in-vehicle device. The response format is composed of a plurality of sentences including the first sentence that is a direct response to the user's speech, a second sentence that supplements the first sentence, and a third sentence that is different from the first and second sentences. The response formats constituting the second sentence and the third sentence are also defined in the table.

The prompt generation unit 14 includes the response format in the prompt when generating the prompt. That is, the prompt generation unit 14 expresses the response format in text. Further, the prompt generation unit 14 generates a vehicle text that is useful for processing by the language model 5 (that improves the accuracy of the language information output from the language model 5) in order for the language model 5 to generate speech information in accordance with the response defined in the response format. As described above, the response format is defined as the text including the variables, and the prompt generation unit 14 converts vehicle information that can be input to the variables into a text and includes the text in the prompt.

When the response format is composed of the first sentence and the second sentence that supplements the first sentence, the prompt generation unit 14 generates the vehicle text that is useful for processing by the language model 5 in order for the language model 5 to generate the second sentence. When the information related to the identified in-vehicle equipment is extracted from the information related to the operation manual for the vehicle, the prompt generation unit 14 may further extract information that can be input to the variables of the second sentence, then convert the information into an text, and include the text in the prompt.

The following describes an exemplary prompt generated by the prompt generation unit 14 with reference to FIG. 2. The prompt generation unit 14 includes the speech text "Tell me the meaning of the lamp that is currently on" converted by the speech recognition unit 11 in the prompt. In the example of FIG. 2, the prompt generation unit 14 identifies that the user is inquiring about the in-vehicle device from the speech text or the intent (Intent).

The prompt generation unit 14 selects the response format of the language model 5 from the intent (Intent) by referring to the response table, and includes the response format in the prompt. In the example of FIG. 2, the sentences located below the item of <<Response Format>> correspond to the response format. In the example of FIG. 2, the response format is composed of a first sentence "{color} {lamp name} is on." and a second sentence "{explanation of name}." The first sentence is the response sentence to the speech text, and composed of the name of the in-vehicle device {lamp name}, and the character strings ( {color} and "on") indicating the state of the in-vehicle device. The second sentence is a sentence that supplements the first sentence. In the example of FIG. 2, the response format includes the text of "Add at least one sentence describing the illuminated lamp after the response sentence" in the latter part of the second sentence. The language model 5 can output the language information that provides additional information to the response sentence using the second sentence and a format sentence following the second sentence. The prompt does not need to include the format sentence following the second sentence.

The prompt generation unit 14 may add text so as to allow the supplement of the description of the in-vehicle equipment. In the example of FIG. 2, the prompt generation unit 14 includes the text of "{supplement of lamp name}" and "Execute {countermeasure} when the lamp of {name} lights up" in the prompt.

The prompt generation unit 14 identifies in-vehicle equipment relevant to the named entity "lamp" of the speech text. In the example of FIG. 2, the in-vehicle equipment relevant to "lamp" includes the seat belt warning lamp, the VDC OFF indicator lamp, and the high-beam indicator lamp. The prompt generation unit 14 identifies respective states of the seat belt warning lamp, the VDC OFF indicator lamp, and the high-beam indicator lamp among the vehicle information input from the control signal acquisition unit 13, that is, among the vehicle information included in the control signal. In the example of FIG. 2, the seat belt warning lamp is on, and the VDC OFF indicator lamp and the high-beam indicator lamp are off. As illustrated in FIG. 2, the prompt generation unit 14 generates the vehicle text (states of the seat belt warning lamp, the VDC OFF indicator lamp, and the high-beam indicator lamp = "lighting," "extinguishing," and "extinguishing," respectively), and includes the vehicle text in the prompt. At this time, the prompt generation unit 14 may generate text provided to the variables ({lighting state}, {name}) included in the response format as the prompt.

The prompt generation unit 14 extracts the information related to the identified in-vehicle equipment from the information related to the operation manual for the vehicle, and then generates the prompt. In the example of FIG. 2, the prompt generation unit 14 extracts information on each of the identified in-vehicle equipment (the seat belt warning lamp, the VDC OFF indicator lamp, and the high-beam indicator lamp). The prompt generation unit 14 may generate text provided to the variables included in the response format and variables included in the vehicle text (" {supplement of lamp name}" and "Execute {countermeasure} when the lamp of {name} lights up") added to supplement the description of the in-vehicle equipment as the prompt. In the example of FIG. 2, the prompt generation unit 14 generates text provided to the variables ({supplement of lamp name} and {countermeasure}). Thus, the prompt generation unit 14 generates the prompts as illustrated in FIG. 2.

In the example of FIG. 2, the prompt generation unit 14 generates the text provided to the variable so as to allow the supplement of the description of the in-vehicle equipment, but the prompt generation unit 14 may generate the prompt other than the text provided to the variables. For example, when the specific in-vehicle equipment can be identified from the named entity (Entity) of the speech text, the prompt generation unit 14 may extract information related to the identified in-vehicle equipment from the information related to the operation manual for the vehicle, convert the extracted information into text, and include the text in the prompt. The prompt generation unit 14 may include the extracted information as it is in the prompt, or may include the extracted information in the prompt after textualizing the extracted information.

The prompt generation unit 14 outputs the generated prompt to the language model 5. The language model 5 outputs the language information for the input prompt in accordance with the response manner specified by the response format. When the sentence structure for the response is determined in the prompt, the language model 5 outputs the language information in accordance with the sentence structure.

The prompt generation unit 14 may identify at least one target control signal from the control signals of the vehicle input from the control signal acquisition unit 13, and generate a prompt including a vehicle text obtained by textualizing the target control signal. For example, the control signal acquisition unit 13 transmits various control signals including the captured image data, sensor information, and the information indicating the state of the in-vehicle device and the like to the prompt generation unit 14, and the prompt generation unit 14 identifies a control signal that is a candidate for prompt generation as the target control signal. The prompt generation unit 14 identifies the target control signal based on the input from the user. For example, the prompt generation unit 14 identifies a control signal related to the speech text from the speech text converted by the speech recognition unit 11. For example, in the example of the speech text "Tell me the meaning of the lamp that is currently on." illustrated in FIG. 2, the prompt generation unit 14 identifies the control signal of an in-vehicle device related to "lamp," such as a brake lamp, a seat belt warning lamp, and a room lamp, as the target control signal from the word "lamp." In another example, when the user operates a fog lamp, the prompt generation unit 14 identifies the control signal of the fog lamp as the target control signal based on the operation input of the fog lamp input by the user. Then, the prompt generation unit 14 may generate a prompt including a vehicle text obtained by textualizing the identified target control signal.

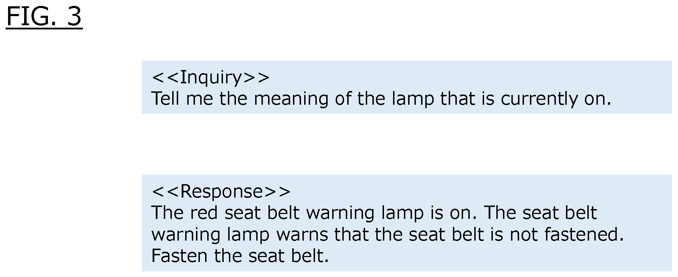

FIG. 3 illustrates a specific example of a speech uttered by the user and a specific example of language information output from the language model 5. <<Inquiry>> indicates the speech of the user, and <<Response>> indicates the language information output from the language model 5. The prompt input to the language model 5 includes the response format. The language model 5 generates the language information in accordance with the first sentence "{color} {lamp name} is on." The language model 5 provides an appropriate text to the variables in the first sentence based on the vehicle text other than the response format, thereby generating a response sentence "The red seat belt warning lamp is on." to the speech text.

The language model 5 provides an appropriate text to the variables in the second sentence "{explanation of name}," thereby generating the language information "The seat belt warning lamp warns that the seat belt is not fastened." to supplement the response sentence. Furthermore, the language model 5 generates the language information "Fasten the seat belt." to supplement the response sentence. Since the response format includes "Add at least one sentence describing the illuminated lamp after the response sentence," two supplemental sentences are added in the response example in FIG. 3.

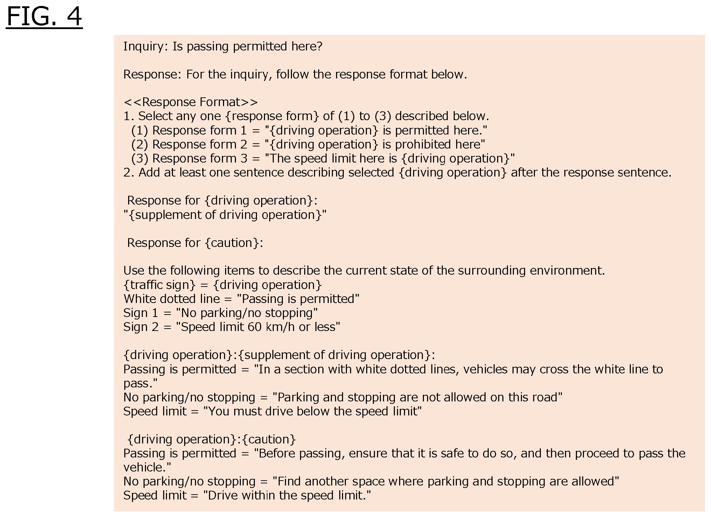

An exemplary prompt generated by the prompt generation unit 14 will be described with reference to FIG. 4. The prompt generation unit 14 includes the speech text "Is passing permitted here?" converted by the speech recognition unit 11 in the prompt. In the example of FIG. 4, the prompt generation unit 14 identifies that the user is inquiring about the driving operation from the speech text or the intent (Intent). Since possible driving operations differ depending on the surrounding environment of the vehicle, the prompt generation unit 14 may identify that the user is inquiring about the state of the surrounding environment of the vehicle.

The prompt generation unit 14 selects the response format of the language model 5 from the intent (Intent) by referring to the response table. The prompt generation unit 14 includes the selected response format as a text in the prompt. In the example of FIG. 4, the response format is composed of a first sentence "1. Select any one {response form} of (1) to (3) described below." and a second sentence "2. Add at least one sentence describing the selected {driving operation} after the response sentence." In the example of FIG. 4, the response sentences to the speech text are in a multiple-choice format.

The prompt generation unit 14 may add a text so as to allow the supplement of the description of the driving operation. In the example of FIG. 4, the prompt generation unit 14 includes the text of " {supplement of driving operation}" and "{caution}" in the prompt.

The prompt generation unit 14 generates a text provided to the variables in the first sentence of the response format. The variable in the first sentence is the driving operation, and identifies the vehicle information related to the driving operation. The database 15 stores the information related to traffic regulations. The information related to traffic regulations refers to information concerning traffic defined by each country, such as road traffic laws, and includes, for example, information on road signs and regulatory information on vehicle travel. The information related to traffic regulations indicates various road conditions, such as a road condition in which passing is permitted, a road condition in which passing is prohibited, and a road condition in which parking and stopping are prohibited. For example, when the road sign is a "White dotted line," a possible driving operation is "Passing is permitted." The information related to traffic regulations may be included in map information.

The prompt generation unit 14 generates the vehicle text (Use the following items to describe the current state of the surrounding environment. {traffic sign} = {driving operation}) as illustrated in FIG. 4 based on the information related to traffic regulations recorded in the database 15, and includes the vehicle text in the prompt. The prompt generation unit 14 includes "White dotted line = 'Passing is permitted‴ and the like in the prompt as a text provided to variables of {traffic sign} = {driving operation} as illustrated in FIG. 4.

The prompt generation unit 14 may identify the possible driving operation based on the vehicle information and/or the environment information. The vehicle information refers to information on the current location, the vehicle speed, and the like of the vehicle measured by GPS. The environment information refers to the detection results of sensors included in the captured image data of the in-vehicle camera 3 and the CAN signal, road information, and the like. The road information may be extracted from the map information recorded in the database 15. For example, when the white dotted line can be detected from the captured image data of the in-vehicle camera 3, the prompt generation unit 14 identifies the "White dotted line" as the traffic sign, and identifies "Passing is permitted" as the possible driving operation. Then, the prompt generation unit 14 generates "Passing is permitted" as the text provided to the variable ({driving operation}) included in the first sentence. That is, the prompt generation unit 14 textualizes information included in the captured image data, and includes the textualize text in the prompt.

The prompt generation unit 14 generates a text provided to the variables ({supplement of driving operation} and {caution}) based on the information related to traffic regulations recorded in the database 15. In the example of FIG. 4, the prompt generation unit 14 generates "In a section with white dotted lines, vehicles may cross the white line to pass" as a text to supplement the driving operation "Passing is permitted," and generates "Before passing, ensure that it is safe to do so, and then proceed to pass the vehicle." as a text for "caution." The prompt generation unit 14 generates a text to supplement the driving operation and a text for caution for "No parking/no stopping" and "Speed limit" as well. That is, the prompt generation unit 14 textualizes character strings indicating vehicle driving restrictions based on traffic regulations. The information related to traffic regulations may be stored in the database 15. In the example of FIG. 4, the prompt generation unit 14 generates the prompt so as to include a character string related to traffic regulations.

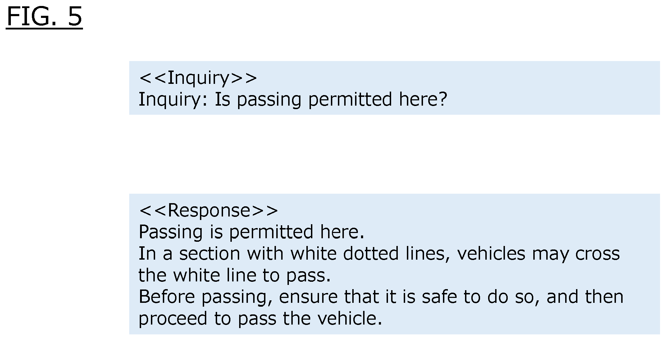

FIG. 5 illustrates a specific example of a speech uttered by the user and a specific example of language information output from the language model 5. When the user utters a speech "Is passing permitted here?" described in <<Inquiry>> in FIG. 5, the prompt generation unit 14 generates the prompt as illustrated in FIG. 4, and outputs the prompt to the language model 5. The language model 5 selects the response form corresponding to the current vehicle state according to the first sentence of the response format. The language model 5 provides an appropriate text to the variables, thereby generating the response sentence "Passing is permitted here." to the speech text. The language model 5 generates the language information to supplement the driving operation "In a section with white dotted lines, vehicles may cross the white line to pass." and "Before passing, ensure that it is safe to do so, and then proceed to pass the vehicle." according to the second sentence.

As described above, in this embodiment, when making the response to the inquiry from the user, to obtain the response corresponding to the vehicle state from the language model 5, the prompt generation unit 14 identifies the vehicle information related to the user's speech based on the control signal (the image signal including the captured image data and the CAN signal), textualizes the vehicle information to generate the vehicle text, and generates the prompt including the vehicle text. Thus, the user can obtain the response corresponding to the vehicle state and/or the surrounding environment of the vehicle.

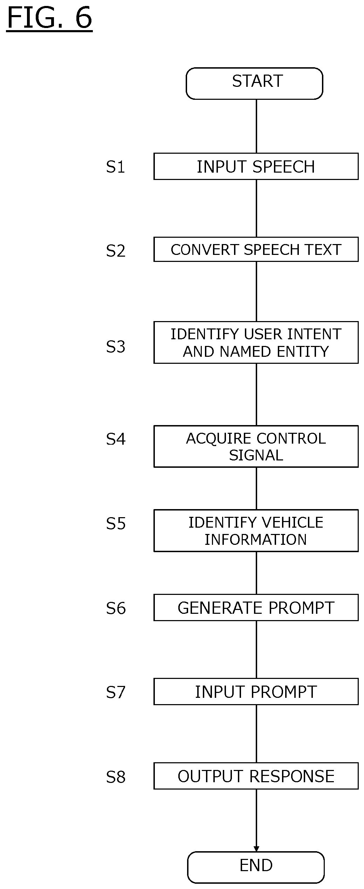

Next, a process of the data processing method by the data processing system will be described with reference to FIG. 6. In Step S1, the user's speech is input into the speech recognition unit 11 via the microphone 2. In Step S2, the speech recognition unit 11 converts the speech signal into the speech text. In Step S3, the language understanding unit 12 analyzes the speech text to identify the intent (Intent) of the user who uttered the speech and/or the named entity (Entity). In Step S4, the control signal acquisition unit 13 acquires the control signal from the in-vehicle camera 3 and/or the CAN communication network 4.

In Step S5, the prompt generation unit 14 identifies the vehicle information related to the speech based on the control signal. In Step S6, the prompt generation unit 14 generates the prompt including the vehicle text obtained by textualizing the vehicle information. In Step S7, the prompt generation unit 14 inputs the prompt into the language model 5. In Step S8, the language model 5 receives the prompt, and outputs the response to the user's speech. Then, the data processing device 1 terminates the control process of the data processing method.

As described above, the data processing device or the data processing method according to this embodiment acquires the control signal of the vehicle, generates the prompt including the vehicle text obtained by textualizing the control signal, and inputs the prompt into the language model. Thus, the response corresponding to the control signal of the vehicle can be obtained from the language model.

The prompt includes the text response format indicating the form of the response sentence or the range of the response sentence by the language model. This allows the language model to make the response in accordance with the response format. Since the language model makes the response in accordance with the response format, the response corresponding to the current vehicle state can be obtained. When the language model 5 outputs the language information in a state where the language model 5 does not have the response format, the language model 5 possibly outputs an incorrect response. As described in this embodiment, since the prompt includes the text indicating the form of the response sentence or the range of the response sentence by the language model, the output of the incorrect response can be suppressed.

In this embodiment, the prompt generation unit 14 identifies at least one target control signal among the control signals acquired by the control signal acquisition unit 13 based on the input by the user, and generates the prompt including the text obtained by textualizing the target control signal. Thus, the response corresponding to the control signal of the vehicle can be obtained from the language model.

In this embodiment, the speech data is generated from the user's speech, the control signal of the vehicle is acquired, the vehicle information related the speech is identified based on the control signal, the prompt including the vehicle text obtained by textualizing the vehicle information is generated, and the prompt is input into the language model. Thus, the response corresponding to the vehicle state and/or the state of the surrounding environment of the vehicle can be obtained from the language model.

In this embodiment, the vehicle text includes the first sentence composed of the character string indicating the name of the in-vehicle device and/or the state of the in-vehicle device. Thus, the information on the in-vehicle device can be used for the prompt.

In this embodiment, the vehicle text includes the second sentence that supplements the first sentence. Thus, the content that supplements the first sentence can be added to the language information output from the language model 5.

In this embodiment, the vehicle text includes the character string related to traffic regulations. Thus, the content related to traffic regulations can be added to the language information output from the language model 5.

In this embodiment, the vehicle text includes the text indicating the information included in the captured image data. Thus, the information identified from the captured image data can be added to the language information output from the language model 5.

In this embodiment, the prompt generation unit 14 outputs the prompt including the speech text and the vehicle text to the language model. Thus, additional information can be output from the language model 5 in addition to the response to the user's speech.

In this embodiment, the prompt generation unit 14 identifies at least one of the vehicle information related to the user's intent, the vehicle information including the named entity, and the vehicle information related to the named entity, from the information included in the control signal. Thus, the user's intent can be reflected in the language information output from the language model 5. Alternatively, the user's intent can be identified from the named entity included in the speech, thereby reflecting the user's intent in the language information of the language model 5.

In this embodiment, the database 15 may store a past vehicle text indicating the past vehicle state, and the prompt generation unit 14 may generate the prompt based on the past vehicle text. For example, when the user inquires about the past state of the in-vehicle device, such as "Which warning lamp was on two minutes ago?," the prompt generation unit 14 may generate the prompt by using the past vehicle text. Specifically, the prompt generation unit 14 includes the vehicle text obtained by textualizing the state of the warning lamp two minutes ago in the prompt. Thus, the past information on the in-vehicle device can be added to the language information output from the language model 5. Further, by storing the control signal in text, the memory capacity required for the storage can be reduced compared with a case where the control signal is stored as it is in the database 15.

In this embodiment, the language model 5 may generate the language information by providing not only the text included in the prompt but also a text included in data such as training data to the variables included in the response format. The language model 5 may generate the language information based on the prompt without providing the text to the variables included in the prompt. The language model 5 is not necessarily provided only in the vehicle, but may be provided in a server and the like communicatively connected to the vehicle.

In this embodiment, the language model 5 may be provided in a communication terminal capable of communicating with the data processing device 1.

### Description of Reference Numerals

- 1: Data processing device
- 2: Microphone
- 3: In-vehicle camera
- 4: CAN communication network
- 5: Language model
- 6: IVI system
- 10: Speech data generation unit
- 11: Speech recognition unit
- 12: Language understanding unit
- 13: Control signal acquisition unit
- 14: Prompt generation unit
- 15: Database

## Claims

1. A data processing device comprising:
a control signal acquisition unit that acquires a control signal of a vehicle; and
a prompt generation unit that generates a prompt for a language model that outputs language information, wherein
the prompt generation unit generates the prompt including a vehicle text obtained by textualizing the control signal acquired by the control signal acquisition unit, and
the prompt includes a text indicating a form of a response sentence by the language model or a range of the response sentence.

2. The data processing device according to claim 1, wherein
the prompt generation unit:
identifies at least one target control signal among the control signals acquired by the control signal acquisition unit based on an input by a user; and
generates the prompt including a vehicle text obtained by textualizing the target control signal.

3. The data processing device according to claim 2, wherein
the vehicle text includes a first sentence composed of a character string indicating a name and a state of an in-vehicle device.

4. The data processing device according to claim 3, wherein
the vehicle text includes a second sentence that supplements the first sentence.

5. The data processing device according to any one of claims 1 to 4, wherein
the vehicle text includes a text related to traffic regulations.

6. The data processing device according to claim 3, wherein
the name of the in-vehicle device is a name of a warning lamp of the vehicle, and
the state of the in-vehicle device refers to lighting or extinguishing of the warning lamp.

7. The data processing device according to any one of claims 1 to 6, comprising
a storage unit that stores a past vehicle text, wherein
the prompt generation unit generates the prompt based on the past vehicle text.

8. The data processing device according to any one of claims 1 to 7, wherein
the control signal includes captured image data of an in-vehicle camera, and
the vehicle text includes a text indicating information included in the captured image data.

9. The data processing device according to any one of claims 1 to 8, comprising
a speech data generation unit that generates speech data from an input speech of the user, wherein
the prompt generation unit identifies vehicle information on the speech based on the control signal, and
the vehicle text includes a text obtained by textualizing the vehicle information.

10. The data processing device according to any one of claims 1 to 8, comprising
a speech data generation unit that generates speech data from an input speech of the user, wherein
the speech data generation unit generates the speech data including a speech text obtained by textualizing the speech, and
the prompt generation unit outputs the prompt including the speech text and the vehicle text to the language model.

11. The data processing device according to any one of claims 1 to 8, comprising
a speech data generation unit that generates speech data from an input speech of the user, wherein
the speech data generation unit:
generates the speech data including a speech text obtained by textualizing the speech; and
identifies intent of the user who uttered the speech based on the speech text and/or a named entity included in the speech text, and
the prompt generation unit identifies at least one of vehicle information related to the intent of the user, the vehicle information including the named entity, and the vehicle information related to the named entity, from information included in the control signal.

12. A data processing system comprising:
the data processing device according to any one of claims 1 to 10; and
a communication terminal that is capable of communicating with the data processing device and includes the language model.

13. A data processing method executed by a processor, wherein
the processor:
acquires a control signal of a vehicle;
generates a prompt including a vehicle text obtained by textualizing the control signal; and
inputs the prompt into a language model that outputs language information, and
the prompt includes a text indicating a form of a response sentence by the language model or a range of the response sentence.
